# EUROPÄISCHE PATENTSCHRIFT

(11) **EP 2 360 403 B1**
(45) Veröffentlichungstag und Bekanntmachung des Hinweises auf die Patenterteilung: **05.09.2012**
(21) Anmeldenummer: 10153357.8
(22) Anmeldetag: 11.02.2010
(51) Int. Cl.: F16K 31/04, F16K 31/05

(54) **Ventil-Stellantrieb mit anpassbarer Überlastkupplung**
Valve actuator with adjustable torque limiting coupling
Actionneur de soupape avec couplage de limitation du couple réglable

(43) Veröffentlichungstag der Anmeldung: 24.08.2011
(73) Patentinhaber: SIEMENS AKTIENGESELLSCHAFT, 80333 München (DE)
(72) Erfinder: Bühler, Daniel, 8610 Uster (CH); Evertz, Jörg, 8903 Birmensdorf (CH); Sprecher, Martin, 6330 Cham (CH); Werner, Uwe, 8142 Uitikon Waldegg (CH)

(56) Entgegenhaltungen:
- WO-A1-2005/012064
- WO-A1-2007/130041
- DE-A1- 2 134 430
- DE-A1- 10 034 919
- FR-A1- 2 706 972
- GB-A- 2 360 071
- US-A- 1 534 701

## Beschreibung

Die Erfindung betrifft das technische Gebiet der Heizungs-Lüftungs- und Klimatechnik. Die vorliegende Erfindung betrifft insbesondere einen Stellantrieb für ein Ventil, insbesondere für ein Ventil einer Heizungs-, Lüftungs- und/oder Klimaanlage.

In vielen Anwendungen in der Heizungs-, Lüftungs- und Klimatechnik (HLK) wird ein Wärmeträgermedium verwendet, um thermische Energie von einem Quellort zu einem Zielort zu übertragen. Die Übertragung von thermischer Energie kann dazu dienen, einen Raum oder einen Bereich innerhalb eines Gebäudes zu heizen. In diesem Fall nimmt das Wärmeträgermedium an dem Quellort Wärmeenergie auf und gibt es nach einem Transport hin zu dem Zielort zumindest teilweise wieder ab. Ebenso kann die Übertragung von thermischer Energie auch dazu dienen, einen Raum oder einen Bereich innerhalb eines Gebäudes zu kühlen. In diesem Fall nimmt das Wärmeüberträgermedium an dem Zielort Wärmeenergie auf und gibt die Wärmeenergie an dem Quellort zumindest teilweise wieder ab.

Das Wärmeträgermedium kann jedes beliebige Fluid sein. In den meisten Fällen wird Wasser verwendet. Wasser hat den Vorteil, dass es eine hohe spezifische Wärmekapazität hat und damit pro Masseeinheit eine besonders große Wärmemenge transportieren kann.

Um den Fluss von Wärmeträgermedium in einer HLK-Anlage zu steuern bzw. zu regeln, werden Ventile verwendet, welche auch als HLK-Ventile bezeichnet werden. Mittels eines sog. Absperr- oder Drosselventils kann beispielsweise die Durchflussmenge des Wärmeträgermediums angepasst werden. Mittels eines Mehrwegeventils kann eine geeignete Vermischung des sich auf einem bestimmten Temperaturniveau befindlichen Wärmeträgermediums mit einem sich auf einem anderen Temperaturniveau befindlichen Wärmeträgermedium realisiert und damit eine Anpassung der Wärmeleistung werden.

HLK-Ventile weisen einen Stellantrieb auf, welcher grundsätzlich mittels verschiedenen Arten von Antriebsmitteln angetrieben bzw. verstellt werden kann. (A) Eine erste Art von Antriebsmittel ist beispielsweise ein Motor, welcher bei einer geeigneten Ansteuerung eine automatische Verstellung des Ventils erlaubt. (B) Eine zweite Antriebsmittel-Art ist eine Handverstelleinrichtung, beispielsweise ein Handrad, mit der/dem eine Bedienperson das betreffende HLK-Ventil manuell verstellen kann. Die Möglichkeit einer Handverstellung kann insbesondere bei einer Inbetriebnahme einer HLK-Anlage von Vorteil sein. (C) Eine dritte Antriebsmittel-Art stellt eine sog. Rücklauffeder dar, welche nach einer Verstellung des HLK-Ventils mit einer Handverstelleinrichtung und/oder einem Motor das HLK-Ventil beispielsweise nach einem Stromausfall automatisch in seine Ausgangsstellung zurück stellt. Ein HLK-Ventil hat typischerweise außer dem o.g. Antriebsmittel (A) zusätzlich noch die o.g. Antriebsmittel (B) und oder (C). Für HLK-Ventile gibt es verschiedene Antriebe, welche nachfolgend kurz erläutert werden:
NSR (Non Spring Return) Antriebe: Diese Art von VentilAntrieb weist einen Motor und eine Handverstelleinrichtung auf. Eine Rücklauffeder ist nicht vorhanden. NSR-Antriebe werden auch als Nicht-Federrücklauf-Antriebe bezeichnet.

WSR (With Spring Return) Antriebe: Diese Art von VentilAntrieb weist als mögliche Energiequellen einen Motor, eine Rücklauffeder und eine Handverstelleinrichtung auf. In der Regel wird ein WSR-Antrieb im sog. Auto-Mode mit dem Motor betrieben. Wenn jedoch eine Versorgungsspannung für den Motor ausfällt, schließt die Rücklauffeder das mit dem Antrieb betriebene Ventil. Liegt keine Versorgungsspannung am Motor an, dann kann der WSR-Antrieb manuell geöffnet und in einer beliebigen Position verriegelt werden. Sobald die Versorgungsspannung wieder anliegt, wird der WSR-Antrieb wieder entriegelt und der WSR-Antrieb geht in den Auto-Mode Regelbetrieb über.

TSR (TÜV Spring Return) Antriebe: Derartige Ventil-Antriebe, welche auch als Federrücklauf-Antriebe bezeichnet werden, diese haben als mögliche Energiequellen einen Motor und eine Rücklauffeder. Infolge von für bestimmte Anwendungen zu beachtende TÜV (Technischer Überwachungs-Verein) Normen, dürfen TSR-Antriebe keine Handverstelleinrichtung aufweisen. Bei einem Stromausfall schließt die Rücklauffeder automatisch das mit dem TSR-Antrieb gekoppelte HLK-Ventil.

Stellantriebe für HLK-Ventile müssen eine Reihe von technischen Eigenschaften aufweisen und/oder technischen Anforderungen erfüllen, um in der Praxis für HLK-Anlagen eingesetzt zu werden. So muss beispielsweise ein geeigneter Stellantrieb je nach Betriebsmodus eine der drei Energiequellen "Motor", "Rücklauffeder" und "Handversteller" auf ein bewegliches Drosselorgan eines HLK-Ventils schalten können.

Ferner sollte das Drehmoment, welches mittels der Handverstelleinrichtung auf das Ventil bzw. auf ein Getriebe des Antriebs einwirken kann, durch eine geeignete Überlastkupplung begrenzt werden, damit eine absichtliche und/oder versehentliche Beschädigung von Stellantrieb und/oder Ventil verhindert werden kann. Bekannte Einrichtungen zur Drehmomentbegrenzung für HLK-Ventile sind jedoch technisch relativ aufwändig und zudem unflexibel, da ein vorgegebenes maximal zu übertragendes Drehmoment nicht variiert werden kann.

Mechanische Einrichtungen durch welche ein Drehmoment auf einen vorgegebenen Maximalwert begrenzbar ist, sind beispielsweise aus US 1 534 701 A, WO 2007/130041 A, GB 2 360 071 A, DE 100 34 919 A und FR 2 706 972 A bekannt.

Der Erfindung liegt die Aufgabe zugrunde, einen Stellantrieb für ein Ventil zu schaffen, welcher eine einfache und zugleich hinsichtlich des zu übertragenden maximalen Drehmoments flexible Drehmomentbegrenzung aufweist.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Stellantrieb für ein Ventil, insbesondere für ein Ventil einer Heizungs-, Lüftungs- und/oder Klimaanlage, beschrieben. Der beschriebene Stellantrieb weist auf (a) ein Gehäuse, (b) eine Welle, welche zumindest teilweise in dem Gehäuse angeordnet ist und welche direkt oder indirekt mit dem Ventil koppelbar ist, so dass bei einer Drehung der Welle das Ventil verstellbar ist, (c) ein Handbetätigungselement, welches mit der Welle koppelbar ist, und (d) eine Überlastkupplung, welche zwischen dem Handbetätigungselement und der Welle angeordnet ist und welche ein Drehmoment, welches von dem Handbetätigungselement auf die Welle übertragen wird, auf einen vorgegebenen Maximalwert beschränkt. Erfindungsgemäß weist die Überlastkupplung ein Kupplungselement und ein austauschbares Federelement auf, welches das Kupplungselement gegen die Welle drückt, so dass der Maximalwert für das übertragbare Drehmoment von dem austauschbaren Federelement abhängt.

Dem beschriebenen Stellentrieb liegt die Erkenntnis zugrunde, dass durch eine geeignete Wahl des austauschbaren Federelements das maximale Drehmoment, welches von der Überlastkupplung übertragen werden kann, auf einfache und effiziente Weise an die jeweiligen Anforderungen angepasst werden kann. Dies bedeutet, dass die Auslösemomente der beschriebenen Überlastkupplung abhängig von der Wahl des Federelements auf verschiedene Werte konfektioniert werden können.

Das austauschbare Federelement kann beispielsweise so dimensioniert sein, dass zum einen eine zuverlässige manuelle Verstellung des Ventil möglich ist und dass zum anderen, wenn sich das Ventil beispielsweise in seiner geöffneten oder geschlossenen Endposition befindet, eine Beschädigung des Ventils oder eines zwischen Ventil und Stellantrieb angeordneten Getriebes auch bei einer kraftvollen Betätigung des Handbetätigungselements zuverlässig verhindert werden kann.

Der Maximalwert für die Drehmomentübertragung kann insbesondere anhängig von der Form, von der Größe und/oder von dem Material des Federelements sein. Diese Parameter können die Elastizität oder die Spannkraft des austauschbaren Federelements bestimmen. Die Spannkraft kann wiederum die Auflagekraft zwischen dem Kupplungselement und der Welle bestimmen. Selbstverständlich hängt die Spannkraft und damit auch die Auflagekraft bzw. der Auflagedruck zwischen Kupplungselement und Welle auch von der Position des Federelements relativ zu dem Kupplungselement ab.

Die Kraft- bzw. Drehmomentübertragung zwischen Kupplungselement und Welle kann auf verschiedenen Wechselwirkungen beruhen. So kann zwischen Kupplungselement und Welle eine Reibungskraft auftreten, die von den beiden einander zugewandten Oberflächen von Kupplungselement und Welle abhängt. Zumindest einer der beiden Oberflächen kann beispielsweise eine Gummioberfläche sein, die für eine große Reibung sorgt und damit ein frühzeitiges Durchrutschen der Überlastkupplung verhindert. Die beiden einander zugewandten Oberflächen können auch eine gewisse Rauigkeit aufweisen, welche neben dem Auflagedruck ebenfalls ein wichtiger Parameter für das übertragbare Drehmoment bzw. die übertragbare Kraft darstellt. Ferner kann die Reibung zwischen Kupplungselement und Welle auch durch das Magnetfeld von einem oder von mehreren Magneten, insbesondere Permanentmagneten, verursacht sein, welcher oder welche an der Welle und/oder an dem Kupplungselement angebracht sind.

Das Handbetätigungselement kann beispielsweise ein einfaches Handrad sein, welches von einer Bedienperson für eine manuelle Verstellung des Ventils betätigt wird.

Gemäß der Erfindung ist das austauschbare Federelement an einem Gehäuse des Handbetätigungselements angebracht. Das austauschbare Federelement kann dabei in einer entsprechend geformten Aussparung des Gehäuses eingelegt sein. Dies kann bedeuten, dass das Gehäuse für das austauschbare Federelement eine geeignete Aufnahme darstellt. Während des Zusammenbaus des beschriebenen Stellantriebs kann das austauschbare Federelement beispielsweise einfach in die Aufnahme bzw. die Aussparung eingelegt werden. Nachdem der Stellantrieb dann zusammengebaut ist, kann das Federelement dann in der Aufnahme bzw. Aussparung und damit in seiner vorgesehenen Position fixiert werden. Dies kann automatisch durch andere Komponenten des Stellantriebs erfolgen, so dass zur Fixierung des Federelements kein separater Arbeitsschritt erforderlich ist. Ebenso kann auch ein geeigneter Verriegelungsmechanismus wie beispielsweise ein Sicherungselement dazu verwendet werden, um das Federelement zuverlässig in seiner Aufnahme bzw. Aussparung zu fixieren.

Bevorzugt ist die Aufnahme in dem Gehäuse derart ausgebildet dass verschiedene Federelemente, welche jeweils eine unterschiedliche Kraft bzw. einen unterschiedlichen Druck auf das Federelement ausüben, aufgenommen werden können. Selbstverständlich können die verschiedenartigen Federelemente auch derart ausgebildet sein, dass sie gleiche oder zumindest ähnliche Außenabmessungen aufweisen und so auf einfache Weise eine anwendungsspezifische Variantenbestückung des Stellantriebs mit verschiedenen, unterschiedlich starken Federelementen erleichtern.

Gemäß der Erfindung weist das austauschbare Federelement die Form eines länglichen Streifens auf. Ferner ist das austauschbare Federelement zumindest teilweise aus einem elastischen Material, insbesondere aus Metall, hergestellt. Das austauschbare Federelement kann dabei eine einfache Blattfeder darstellen.

Die beschriebene Formgebung kann den Vorteil haben, dass das austauschbare Federelement auf besonders einfache Weise hergestellt werden kann. Ferner kann das derart geformte austauschbare Federelement problemlos an dem o.g. Gehäuse angebracht werden.

Es wird darauf hingewiesen, dass unterschiedliche starke austauschbare Federelemente bzw. Blattfedern auf einfache Weise dadurch hergestellt werden können, dass ausgehend von einem elastischen Ausgangsstreifen verschieden große Ausschnitte aus- bzw. abgeschnitten werden. Auf diese Weise bleibt die äußere Form des Streifens im Wesentlichen erhalten. Infolge von unterschiedlichen lokalen Breiten des Streifens kann, von außen leicht ersichtlich, eine individuelle Federhärte eingestellt werden.

Gemäß der Erfindung weist das Kupplungselement eine erste Verzahnung und die Welle eine zweite Verzahnung auf. Dabei greifen die erste Verzahnung und die zweite Verzahnung zumindest teilweise ineinander. Dies hat den Vorteil, dass die Überlastkupplung innerhalb eines kleinen Bauraumes realisiert werden kann und trotzdem in der Lage ist, bei Bedarf in Verbindung mit einem starken Federelement hohe Drehmomente zu übertragen.

Im zusammengebauten Zustand des Stellantriebs kann das Kupplungselement die Welle zumindest teilweise umgeben, wobei die erste Verzahnung des Kupplungselements und die zweite Verzahnung der Welle zumindest teilweise ineinander greifen.

Die beschriebene eine Verzahnung aufweisende Überlastkupplung kann auf einfache Weise dahingehend realisiert werden, dass das jeweilige Auslösemoment innerhalb eines mehr oder weniger genau vorgegebenen Toleranzbereiches liegt. Ferner kann einer Bedienperson im Falle einer Auslösung bzw. eines Öffnens der Überlastkupplung ein gut spürbares Feedback gegeben werden. So kann die Bedienperson das Auslösen der Überlastkupplung beispielsweise durch ein durch eine Relativbewegung der beiden Verzahnungen verursachtes Vibrieren spüren und/oder durch ein entsprechendes Vibrations- oder Ratschengeräusch hören.

Gemäß einem Ausführungsbeispiel der Erfindung weist der Stellantrieb ferner einen Motor auf, welcher mit der Welle koppelbar ist.

Durch eine geeignete elektrische Ansteuerung des Motors kann der Stellantrieb und damit auch das von dem Stellantrieb bewegte Ventil automatisch in eine gewünschte Zielposition gebracht werden.

Gemäß einem weiteren Ausführungsbeispiel der Erfindung weist der Stellantrieb ferner eine Arbeitsfeder auf, welche mit der Welle koppelbar ist.

Die Arbeitsfeder kann dazu dienen, dass die Stelleinrichtung bei einem Loslassen des Handbetätigungselements und/oder bei einem Ausfall der Spannungsversorgung selbstständig in eine Vorzugsstellung überführt wird. Dies kann insbesondere für sicherheitsrelevante Anwendungen bedeutend sein.

Gemäß einem weiteren Ausführungsbeispiel der Erfindung weist der Stellantrieb ferner eine weitere Welle, welche direkt oder indirekt mit dem Ventil koppelbar ist, und einen Koppelmechanismus auf, welcher zwischen der weiteren Welle und der Welle angeordnet ist. Der Koppelmechanismus ist derart eingerichtet, dass (a) in einem ersten Betriebszustand das Handbetätigungselement von der weiteren Welle entkoppelt ist und (b) in einem zweiten Betriebszustand das Handbetätigungselement mit der weiteren Welle gekoppelt ist.

Der Koppelmechanismus kann beispielsweise eine Eingreifkupplung sein, bei der die weitere Welle, welche auch als untere Welle bezeichnet werden kann, und die Welle bei nicht ausgelöster Überlastkupplung im zweiten Betriebszustand starr miteinander verbunden sind und im ersten Betriebszustand zumindest teilweise voneinander entkoppelt sind. Die Kopplung, d.h. ein Übergang vom ersten in den zweiten Betriebszustand, kann bevorzugt durch ein Ineinandergreifen von verschiedenen Komponenten des Koppelmechanismus erfolgen. Eine Entkopplung, d.h. ein Übergang vom zweiten in den ersten Betriebszustand, kann durch ein Voneinander-Lösen der verschiedenen Komponenten erfolgen. Somit kann der erste Betriebszustand auch als Freilaufzustand und der zweite Betriebszustand auch als Koppelzustand bezeichnet werden.

Der erste Betriebszustand kann auch als normaler Betriebszustand bezeichnet werden, da im normalen Betrieb des Stellantriebs eine manuelle Betätigung bzw. Ventilverstellung nicht erforderlich ist. Der zweite Betriebszustand kann beispielsweise dann eingestellt werden, wenn Wartungsarbeiten und/oder Umbauten an einer HLK-Anlage erforderlich sind und auf einfache und effiziente Weise durchgeführt werden sollen.

Gemäß einem weiteren Ausführungsbeispiel der Erfindung liegt einer der beiden Betriebszustände dann vor, wenn sich die weitere Welle in Bezug zu der Welle in einer ausgerückten Position befindet. Ferner liegt der andere der beiden Betriebszustände dann vor, wenn sich die weitere Welle in Bezug zu der Welle in einer eingerückten Position befindet. Dies kann den Vorteil haben, dass der Stellantrieb durch einen besonders einfachen Bedieneingriff von dem ersten Betriebszustand in den zweiten Betriebszustand und umgekehrt überführt werden kann.

Bevorzugt liegt der erste Betriebszustand bzw. der Freilaufzustand vor, wenn das Handbetätigungselement in Bezug zu zumindest einer anderen Komponente des Stellantriebs ausgerückt bzw. herausgezogen ist. Entsprechend liegt der zweite Betriebszustand bzw. der Koppelzustand vor, wenn das Handbetätigungselement in Bezug zu der zumindest einen anderen Komponente eingerückt bzw. hineingedrückt ist.

Der eingerückte Zustand kann auch als "Hand-Mode Push" Zustand bezeichnet werden. Beim Einrücken des Handbetätigungselements wird dieses nämlich in bzw. an die Welle gekoppelt. Gleichzeitig kann ein ggf. vorhandener Motor, welcher ebenfalls die Welle antreiben kann, von der Welle abgekoppelt werden. Dann kann der Stellantrieb bzw. ein mit dem Stellantrieb betriebenes Ventil durch eine einfache Bewegung des Handbetätigungselements verstellt werden, ohne dass dabei eine versehentliche Beschädigung des Motors oder eines mit dem Motor verbundenen Getriebes zu besorgen wäre.

Gemäß einem weiteren Ausführungsbeispiel der Erfindung weist der Stellantrieb ferner eine Rutschkupplung auf, welche ebenfalls zwischen der weiteren Welle und der Welle angeordnet ist und welche derart eingerichtet ist, dass sich, auch wenn sich der Koppelmechanismus in dem ersten Betriebszustand befindet, bei einer Drehung der weiteren Welle die Welle dreht.

Dies bedeutet, dass das mit der Welle gekoppelte Handbetätigungselement nicht nur zum aktiven manuelle Antreiben der Welle verwendet werden kann sondern dass das Handbetätigungselement auch als Anzeigeeinrichtung für eine Drehung der weiteren Welle fungieren kann, welche mittels einer eigenen Drehung einer Bedienperson anzeigt, dass die weitere Welle durch eine andere Energiequelle gedreht wird.

Durch die Rutschkupplung, welche typischerweise lediglich ein sehr kleines Drehmoment von der weiteren Welle auf die Welle übertragen kann, stellt das mit der Welle gekoppelte und ansonsten zumindest annähernd freilaufende Handbetätigungselement einen Indikator dar, welche eine Drehung der Welle durch eine eigene nicht von einer Bedienperson veranlasste Drehung anzeigt.

Die andere Energiequelle kann beispielsweise ein Motor und/oder eine Arbeitsfeder sein, welche in bekannter weise die Welle eines Stellantriebes für ein HLK-Ventil antreiben kann bzw. können.

Bevorzugt kann die Rutschkupplung im Vergleich zu der oben beschriebenen Überlastkupplung nur ein sehr kleines Drehmoment übertragen. Ein zumindest annähernd frei laufendes Handbetätigungselement kann daher über die Rutschkupplung in eine Drehbewegung versetzt werden. Falls jedoch das Handbetätigungselement von außen an eine Drehbewegung gehindert werden sollte, dann kann die Rutschkupplung zuverlässig eine Störung des Stellantriebs verhindern.

Gemäß einem weiteren Ausführungsbeispiel der Erfindung weist der Stellantrieb ferner ein Verriegelungselement auf, welches an dem Handbetätigungselement angebracht ist und welches derart ausgebildet ist, dass bei einer Aktivierung des Verriegelungselements ein Verstellen des Handbetätigungselements relativ zu dem Gehäuse verhindert ist. Dies hat den Vorteil, dass eine ungewollte Bewegung des Handbetätigungselements auf einfache und zuverlässige Weise verhindert werden kann.

Das Verriegelungselement kann beispielsweise für Wartungsarbeiten und/oder für Umbauarbeiten an einer HLK-Anlage aktiviert werden. Auch bei einer bestehenden elektrischen Kabelverbindung zu dem Motor (bei einer beliebigen elektrischen Motoransteuerung) kann ein ungewolltes Verstellen des Stellantriebs verhindert werden. Ein aufwendiges Lösen von elektrischen Verbindungen, wie es bei bekannten HLK-Stellantrieben im Wartungsfall erforderlich ist, ist bei dem hier beschriebenen Stellantrieb nicht mehr nötig. Damit können Wartungs-und/oder Umbauarbeiten deutlich zügiger durchgeführt werden.

Gemäß einem weiteren Ausführungsbeispiel der Erfindung ist das Verriegelungselement in Bezug zu der Längsachse der Welle radial verschiebbar. Dabei kann das Verriegelungselement mit dem Gehäuse des Stellantriebs auf geeignete Weise in Eingriff gebracht werden.

In diesem Zusammenhang wird zur Sicherheit darauf hingewiesen, dass das hier genannte Gehäuse des Stellantriebs verschieden ist von dem bereits weiter oben erwähnten Gehäuse des Handbetätigungselements.

Die Aktivierung des Verriegelungselements mittels einer radialen Verschiebung hat den Vorteil, dass das Handbetätigungselement von einer Bedienperson durch eine einfache Handbewegung, ggf. sogar lediglich durch die Bewegung eines einzigen Fingers, arretiert werden kann.

Der Eingriff zwischen Verriegelungselement und Gehäuse verhindert eine unerwünschte Drehung des Handbetätigungselements.

Ferner kann, das Verriegelungselement auch in Bezug zu der Welle noch in axialer Richtung mit dem Gehäuse in Eingriff gebracht werden. Dies kann beispielsweise durch ein Untergreifen an einem Vorsprung des Gehäuses des Stellantriebs erfolgen. Dadurch kann ein Verschieben des Handbetätigungselements in axialer Richtung verhindert werden. Insbesondere kann ein versehentlicher Übergang des Handbetätigungselements von dem ersten Betriebszustand zu dem zweiten Betriebszustand und umgekehrt verhindert werden.

Es wird ausdrücklich darauf hingewiesen, dass das hier beschriebene Verriegelungselement sowohl für den genannten radialen Eingriff als auch gleichzeitig für den genannten axialen Eingriff verwendet werden kann. Dadurch kann auf einfache Weise eine Arretierung des Handbetätigungselements in Bezug auf alle möglichen Bewegungsrichtungen erreicht werden.

Es wird ferner darauf hingewiesen, dass, sofern das Handbetätigungselement nicht eingerückt ist oder nicht durch das Verriegelungselement in der eingerückten Position gehalten wird, die Hubfeder das Handbetätigungselement automatisch in eine Position schieben kann, in der sich der Stellantrieb in einem sog. Auto-Mode befindet. Dabei bedeutet Auto-Mode, dass der Stellantrieb mit einem Motor betrieben wird.

Gemäß einem weiteren Ausführungsbeispiel der Erfindung weist der Stellantrieb ferner ein Einrastelement auf, welches zwischen dem Handbetätigungselement und dem Gehäuse angeordnet ist und welches einen ersten Einrastbereich und einen zweiten Einrastbereich aufweist. Der erste Einrastbereich ist dabei eingerichtet in eine erste Oberflächenkontur des Handbetätigungselementes einzugreifen. Entsprechend ist der zweite Einrastbereich eingerichtet in eine zweite Oberflächenkontur des Gehäuses einzugreifen.

Die erste Oberflächenkontur des Handbetätigungselements kann beispielsweise mehrere Vorsprünge aufweisen, die von einem zentralen Schaft des Handbetätigungselements radial nach außen abstehen. Die Vorsprünge können beispielsweise Zapfen, Pins, Nocken oder jede andere Art von Erhebungen sein, welche für einen mechanischen Eingriff zwischen Handbetätigungselement und Einrastelement in Frage kommen. Bei einem Eingriff von dem ersten Einrastbereich in die erste Oberflächenkontur ist beispielsweise gewährleistet, dass sich bei einer Drehung des Handbetätigungselementes auch das Einrastelement mit dem Handbetätigungselement dreht. Selbstverständlich ist dies nur möglich, wenn nicht gleichzeitig der zweite Einrastbereich in die zweite an dem Gehäuse ausgebildete Oberflächenkontur eingreift.

Die erste Oberflächenkontur und der erste Einrastbereich weisen bevorzugt eine zueinander komplementäre Form auf, so dass ein zuverlässiges Eingreifen möglich ist. Das gleiche kann für die Formgebung des zweiten Einrastbereiches und der zweiten Oberflächenkontur gelten.

Gemäß einem weiteren Ausführungsbeispiel der Erfindung ist das Einrastelement derart ausgebildet, dass (a) die Möglichkeit des Eingreifens des ersten Einrastbereiches in die erste Oberflächenkontur und/oder (b) die Möglichkeit des Eingreifens des zweiten Einrastbereiches in die zweite Oberflächenkontur davon abhängt, in welcher Position sich das Handbetätigungselement befindet. Dies kann bedeuten, dass die Position oder die Stellung des Handbetätigungselementes einen Einfluss auf die Wirkung des Einrastelementes hat.

Beispielsweise kann die Wirkung des Einrastelementes deaktiviert oder verhindert werden, wenn sich das Handbetätigungselement in Bezug zu der Welle in einer ausgerückten Position befindet. In Gegensatz dazu kann die oben beschriebene Wirkung des Einrastelementes aktiviert oder ermöglicht werden, wenn sich das Handbetätigungselement in Bezug zu der Welle in einer eingerückten Position befindet. Die Begriffe "ausgerückte Position" und "eingerückte Position" wurden bereits weiter oben in diesem Dokument genau beschrieben und werden deshalb an dieser Stelle nicht noch einmal im Detail erläutert.

Eine Bedienperson kann ggf. durch ein einfaches Einrücken oder Drücken des Handbetätigungselementes die Wirkung des Einrastelementes aktivieren bzw. ermöglichen und durch ein Ausrücken oder Wegziehen des Handbetätigungselementes die Wirkung des Einrastelementes deaktivieren bzw. unterbinden. Dies bedeutet, dass das Einrastelement in der eingerückten Position des Handbetätigungselementes eine Bewegung, insbesondere eine Drehung im Gegenuhrzeigersinn, des Handbetätigungselementes verhindert. In der ausgerückten Position liegt dann keine Sperrwirkung für eine Bewegung, insbesondere für eine Drehung, des Handbetätigungselementes vor.

Gemäß einem weiteren Ausführungsbeispiel der Erfindung ist der zweite Einrastbereich des Einrastelementes und/oder die zweite Oberflächenkontur des Gehäuses derart geformt, dass das Einrastelement in Bezug zu dem Gehäuse eine Rücklaufsperren-Funktionalität aufweist. Die beschriebene Rücklaufsperren-Funktionalität kann den Vorteil aufweisen, dass nach einer Betätigung des Handbetätigungselementes ein unerwünschter Rücklauf des Handbetätigungselementes insbesondere durch die Federkraft einer Arbeitsfeder auf einfache Weise verhindert werden kann.

Die Rücklaufsperren-Funktionalität kann beispielsweise auf dem Prinzip einer sog. Sperrklinke basieren, bei der der zweite Einrastbereich und/oder die zweite Oberflächenkontur eine Verzahnung mit asymmetrischen Verzahnungsflanken aufweist.

Es wird darauf hingewiesen, dass die Rücklaufsperren-Funktionalität derart ausgebildet sein kann, dass die Rücklaufsperre durch ein leichtes Bewegen, insbesondere durch eine kleine Drehung, des Handbetätigungselementes in einer vorgegebene Richtung deaktiviert werden kann. Eine derartige deaktivierende Bewegung des Handbetätigungselementes kann beispielsweise durch einen Motor des Stellantriebs erfolgen welcher mit der Welle gekoppelt ist. Anschaulich gesprochen kann durch das Bewegen des Handbetätigungselementes in eine vorgegebene Richtung das Einrastelement aus Widerhaken gelöst werden, die an dem jeweiligen Einrastbereich und/oder an der jeweiligen Oberflächenkontur ausgebildet sind.

Beispielsweise kann eine Drehung des Handbetätigungselementes in (gegen) Uhrzeigerrichtung mit lediglich einem geringen Widerstand verknüpft sein. Bei dieser Drehung kann dann eine Bedienperson ein Vibrieren spüren und/oder durch ein entsprechendes Vibrations- oder Ratschengeräusch hören. Im Gegensatz dazu ist eine Drehung gegen (in) Uhrzeigerrichtung infolge der beschriebenen Sperrklinkenwirkung unterbunden.

Gemäß einem weiteren Ausführungsbeispiel der Erfindung weist der Stellantrieb ferner eine Hubfeder auf, welche an dem Handbetätigungselement angreift und eine Kraft entlang der axialen Richtung der Welle auf das Handbetätigungselement ausübt.

Um die Kraftwirkung auf das Handbetätigungselement ausüben zu können, muss die Hubfeder zusätzlich noch an einer anderen Komponente des Stellantriebs angreifen. Diese andere Komponente kann beispielsweise die Welle sein. Bevorzugt drückt die Hubfeder die o.g. Welle, welche einen oberen zentralen Schaft darstellt, von der o.g. weiteren Welle, welche einen unteren zentralen Schaft darstellt, weg.

Die beschriebene Hubfeder hat den Vorteil, dass das Handbetätigungselement durch einen einfachen Bedieneingriff einer Bedienperson in verschiedene in Bezug zu der Welle axiale Positionen gebracht werden kann. Die unterschiedlichen axialen Positionen können beispielsweise die oben beschriebenen und mit verschiedenen Betriebszuständen des Handbetätigungselementes verknüpften Positionen, insbesondere die ausgerückte Position und die eingerückte Position, sein.

Es wird darauf hingewiesen, dass gemäß einem bevorzugten Ausführungsbeispiel der Erfindung das Einrastelement durch eine Kombination einer Verschiebebewegung des Handbetätigungselements entlang der Achsrichtung und einer Drehbewegung im Uhrzeigersinn des o.g. Einrastelementes aktiviert werden kann. So kann beispielsweise in einer arretierten Stellung (Lock Zustand) das Einrastelement ein unerwünschtes Verstellen des Antriebs durch eine Arbeitsfeder des Stellantriebs verhindern. Dadurch kann nach einem manuellen Bedieneingriff, mit dem das Handbetätigungselement in eine Zielstellung gebracht worden ist, ein unerwünschtes Verstellen des beschriebenen Stellantriebs verhindert werden.

Insbesondere kann das Arretieren des Handbetätigungselementes dadurch erfolgen, dass bei einer manuellen Drehbewegung des Handbetätigungselementes eine vergleichsweise starke Arbeitsfeder gespannt wird. Beim Loslassen des Handbetätigungselementes dreht die Arbeitsfeder dann das Handbetätigungselement etwas zurück, bis eine nächste Verzahnung zwischen dem Einrastelement und dem Gehäuse greift. Da die Arbeitsfeder typischerweise vergleichsweise stark ist, entsteht dabei eine hohe Reibkraft zwischen den oben beschriebenen Vorsprüngen des Handbetätigungselementes und dem Einrastelement. Diese Reibkraft kann von der wesentlich schwächeren Hubfeder nicht überwunden werden, so dass das Handbetätigungselement in der entsprechenden Axialposition verbleibt. In dieser Position ist durch das Einrastelement eine Drehung des Handbetätigungselementes unterbunden. Dadurch verbleibt trotz der Kraftwirkung der Arbeitsfeder sowohl das Handbetätigungselement als auch die Welle in einer stabilen (Dreh) Position.

Das Lösen (delock) des Handbetätigungselementes kann bevorzugt wie folgt erfolgen: Der Motor wird so betrieben, dass er sich immer zunächst in eine Richtung (z.b. eine Öffnungsrichtung des Ventils) bewegt. Dadurch entriegeln sich die oben beschriebenen Vorsprünge des Handbetätigungselementes und der erste Einrastbereich des Einrastelementes. Dies hat zur Folge, dass die Spannkraft der Arbeitsfeder nicht mehr auf das Handbetätigungselement einwirkt und die oben beschriebene Reibkraft entsprechend reduziert wird. Damit kann die Spannkraft der Hubfeder dann ausreichend stark werden, um das Handbetätigungselement anzuheben. Danach kann der Motor dann die Welle frei und insbesondere ungestört von dem Handbetätigungselement bewegen.

Es wird darauf hingewiesen, dass Ausführungsformen der Erfindung mit Bezug auf unterschiedliche Gegenstände beschrieben wurden. Dem Fachmann wird jedoch bei der Lektüre dieser Anmeldung sofort klar werden, dass, sofern nicht explizit anders angegeben, zusätzlich zu einer Kombination von Merkmalen, die zu einem Gegenstand gehören, auch eine beliebige Kombination von Merkmalen möglich ist, die zu unterschiedlichen Gegenständen gehören.

Weitere Vorteile und Merkmale der vorliegenden Erfindung ergeben sich aus der folgenden beispielhaften Beschreibung derzeit bevorzugter Ausführungsformen.
Figur 1 zeigt in einer perspektivischen Explosionsdarstellung einen Handversteller für einen Stellantrieb und insbesondere eine Überlastkupplung des Handverstellers, welche mit unterschiedlich starken Federelementen bestückt werden kann.
Figur 2 zeigt in einer perspektivischen Darstellung eine Rutschkupplung, welche bei einer Drehung der Welle, die durch einen Motor und/oder durch eine Arbeitsfeder veranlasst ist, eine Drehung des an sich ausgekuppelten Handbetätigungselementes als Anzeigeeinrichtung für die Drehung der Welle bewirkt.
Figur 3 zeigt in einer perspektivischen Darstellung einen Teil eines Stellantriebs mit einem Handbetätigungselement, welches ein radial verschiebbares Verriegelungselement für eine Arretierung des Handbetätigungselementes aufweist.
Figur 4 zeigt in einer perspektivischen Explosionsdarstellung einen Teil eines Stellantriebs, welcher ein zwischen dem Handbetätigungselement und dem Gehäuse angeordnetes Einrastelement aufweist, welches eine Rücklaufsperren-Funktionalität bereitstellt.
Figur 5a, 5b, 5c und 5d zeigen jeweils in einer Querschnittsdarstellung einen keine Arbeitsfeder aufweisenden Stellantrieb mit einem Handbetätigungselement, welches ein radial verschiebbares Verriegelungselement für eine Arretierung des Handbetätigungselementes aufweist.
Figur 6a und 6b zeigen jeweils in einer Querschnittsdarstellung einen eine nicht dargestellte Arbeitsfeder aufweisenden Stellantrieb, welcher ein zwischen dem Handbetätigungselement und dem Gehäuse angeordnetes Einrastelement aufweist, welches eine Rücklaufsperren-Funktionalität bereitstellt.

Es wird darauf hingewiesen, dass Merkmale bzw. Komponenten von unterschiedlichen Ausführungsformen, die mit den entsprechenden Merkmalen bzw. Komponenten der Ausführungsform nach gleich oder zumindest funktionsgleich sind, mit den gleichen Bezugszeichen oder mit einem anderen Bezugszeichen versehen sind, welches sich lediglich in seiner ersten ziffer von dem Bezugszeichen einer entsprechenden Komponente unterscheidet. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter weise miteinander zu kombinieren, so dass für den Fachmann mit den hier explizit dargestellten Ausführungsvarianten eine Vielzahl von verschiedenen Ausführungsformen als offensichtlich offenbart anzusehen sind, jedoch im Rahmen der Ansprüche.

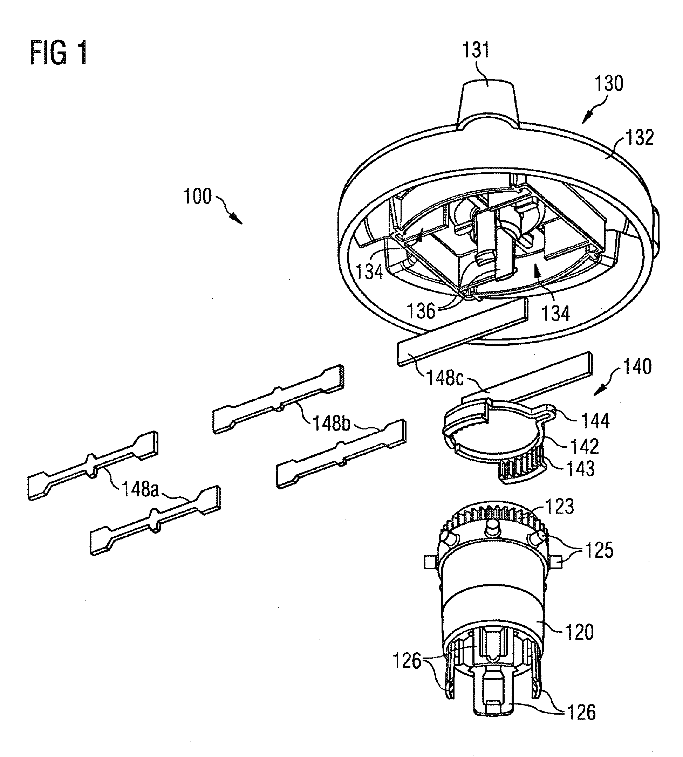

Figur 1 zeigt in einer perspektivischen Explosionsdarstellung einen Handversteller für einen Stellantrieb 100 gemäß einem Ausführungsbeispiel der Erfindung. Der Stellantrieb 100 weist eine Welle 120 auf, welche auch als zentraler oberer Schaft bezeichnet werden kann. Der zentrale obere Schaft 120 kann nämlich über die Schnappvorsprünge 126 mit einem nicht dargestellten zentralen unteren Schaft verbunden werden, welcher wiederum ggf. über ein Getriebe mit einem HLK-Ventil (nicht dargestellt) gekoppelt ist.

Der Stellantrieb 100 weist ferner ein Handbetätigungselement 130 auf, welches gemäß dem hier dargestellten Ausführungsbeispiel ein einfaches Handrad ist. Das Handrad 130 kann von einer Bedienperson beispielsweise unter Verwendung der Griffe 131 manuell gedreht werden. Das Handbetätigungselement 130 umfasst ein Gehäuse 132, in dem zwei Aufnahmebereiche 134 ausgebildet sind. An dem Gehäuse 132 sind ferner zwei Schnappvorsprünge 136 ausgebildet, so dass das Handbetätigungselement 130 in die Welle 120 eingeschnappt werden kann. Dabei sind das Gehäuse und die Schnappvorsprünge 136 so ausgebildet, dass das Handbetätigungselement 130 zur Welle 120 verdreht werden kann.

An der Welle 120 sind mehrere radial abstehende Nocken 125 ausgebildet oder angebracht, deren Funktion nachfolgend noch genauer erklärt wird. An der Welle 120 ist ferner eine Verzahnung 123 ausgebildet, welche einen Teil einer Überlastkupplung 140 darstellt. Die Überlastkupplung 140 weist neben der Verzahnung 123 ein Kupplungselement 142 auf, an dem ebenfalls eine Verzahnung 143 angebracht ist. Gemäß dem hier dargestellten Ausführungsbeispiel ist die Verzahnung 143 mit der Verzahnung 123 zumindest annähernd komplementär, so dass die beiden Verzahnungen ineinander greifen können. Abhängig von der Kraft, mit der die beiden Verzahnungen 123 und 143 gegeneinander drücken bzw. aneinander anliegen, ergibt sich ein maximales Drehmoment, welches vom Gehäuse 132 auf die Welle 120 übertragen werden kann.

Wie aus Figur 1 ersichtlich, kann das ringförmige Kupplungselement 142, welches eine Ausbuchtung 144 aufweist, in dem Gehäuse 132 des Handbetätigungselementes 130 drehsicher aufgenommen werden. Dies bedeutet, dass abhängig von der Kraft, mit der die beiden Verzahnungen 123 und 143 gegeneinander drücken, ein maximales Drehmoment von dem Handbetätigungselement 130 auf die Welle 120 übertragen werden.

Gemäß dem hier dargestellten Ausführungsbeispiel kann die Kraft, mit der die beiden Verzahnungen 123 und 143 gegeneinander drücken, durch die Verwendung von verschieden starken Federelementen 148a, 148b, 148c eingestellt werden. Jeweils ein Federelement wird nämlich in einen der beiden Aufnahmebereiche 134 eingebracht und liegt dann von außen an dem Kupplungselement 142 bzw. an einem Verzahnungsbereich 143 an. Wie aus Figur 1 ersichtlich, unterscheiden sich die unterschiedlichen Federelemente 148a, 148b, 148c durch unterschiedlich große Ausschnitte. Demzufolge unterscheiden sich die Federelemente 148a, 148b, 148c durch unterschiedliche lokale Breiten, was wiederum zur Folge hat, dass (a) die beiden Federelemente 148c eine vergleichsweise große Federkraft auf die Verzahnungen 143 ausüben, dass (b) die beiden Federelemente 148b eine mittlere Federkraft auf die Verzahnungen 143 ausüben und dass (c) die beiden Federelemente 148a eine vergleichsweise kleine Federkraft auf die Verzahnungen 143 ausüben. Damit kann abhängig von der Wahl der Federelemente das maximale Drehmoment, welches mittels der Überlastkupplung von dem Handbetätigungselement 130 auf die Welle 120 übertragen werden kann, gewählt werden.

Es wird darauf hingewiesen, dass gemäß dem hier dargestellten Ausführungsbeispiel die äußeren Abmessungen der Federelemente 148a, 148b und 148c, welche jeweils die Funktion einer Blattfeder darstellen, zumindest annähernd gleich sind. Bei der Herstellung des Stellantriebs 100 kann somit durch eine Variantenbestückung durch die Wahl einer geeigneten austauschbaren Blattfeder 148a, 148b oder 148c das maximal übertragbare Drehmoment an die jeweiligen Anforderungen optimal angepasst werden.

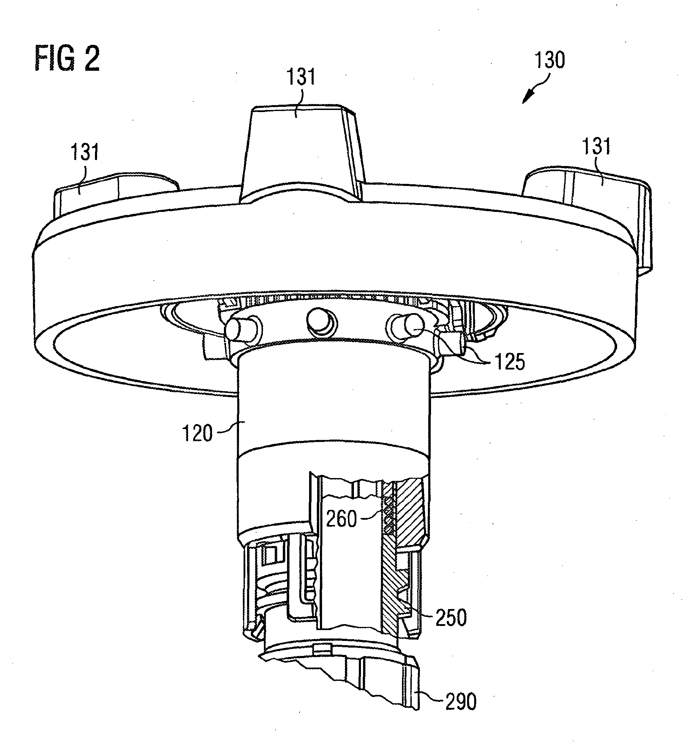

Figur 2 zeigt in einer perspektivischen Darstellung eine Rutschkupplung 250, welche zwischen der Welle 120 und einer Welle 290 angeordnet ist. Mittels der Rutschkupplung 250 kann ebenfalls ein gewisses Drehmoment von der Welle 290 auf das Handbetätigungselement 130 übertragen werden. Dieses Drehmoment ist jedoch im Vergleich zu dem maximalen Drehmoment, welches mittels der Überlastkupplung 140 übertragen werden kann, deutlich kleiner.

Gemäß dem hier dargestellten Ausführungsbeispiel wird die Rutschkupplung 250 dazu verwendet, bei einer Drehung der Welle 290 auch das Handbetätigungselement 130 zu drehen, sofern dieses ansonsten frei drehbar und insbesondere nicht arretiert ist. Dies hat den Vorteil, dass eine Verstellbewegung des Antriebs, die beispielsweise durch einen nicht dargestellten Motor und/oder durch eine Arbeitsfeder 260 veranlasst ist, durch eine entsprechende Drehung des Handbetätigungselementes 130 angezeigt wird. Das Handbetätigungselement 130 stellt bei einer Drehung der Welle somit einen sich drehenden Indikator dar, an dem eine Bedienperson eine Verstellbewegung des Antriebs auf einfache Weise erkennen kann.

Gemäß dem hier dargestellten Ausführungsbeispiel ist die Welle 290 ein unterer zentraler Schaft, der über die in Figur 1 dargestellten Schnappvorsprünge 126 mit der Welle 120 verbunden ist. Der untere zentrale Schaft 290 kann direkt oder über ein nicht dargestelltes Getriebe mit einem ebenfalls in Figur 2 nicht dargestellten HLK-Ventil gekoppelt sein.

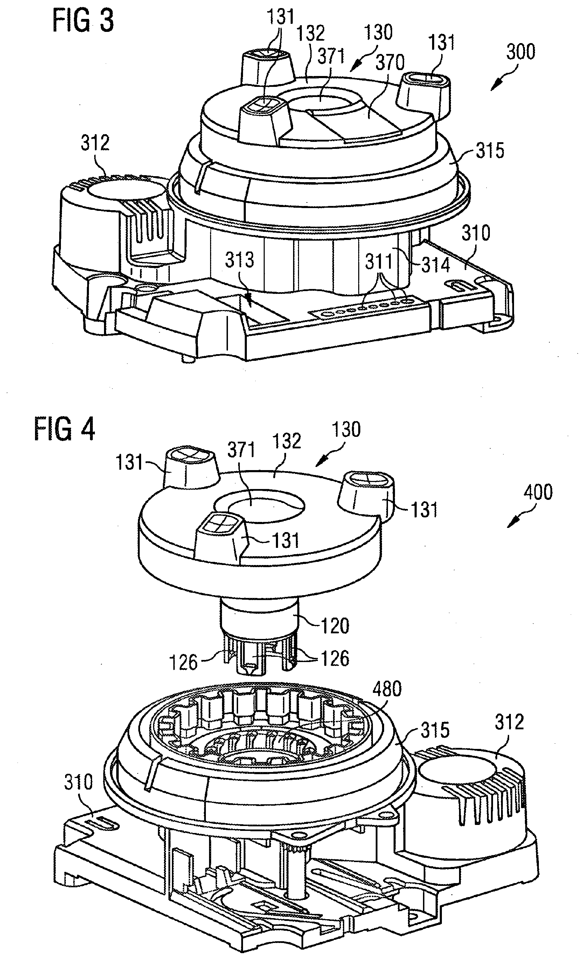

Figur 3 zeigt in einer perspektivischen Darstellung einen Teil eines Stellantriebs 300 mit einem Handbetätigungselement 130, welches ein radial verschiebbares Verriegelungselement 370 für eine Arretierung des Handbetätigungselementes 130 aufweist. Das radial verschiebbare Verriegelungselement 370 weist neben dem in Figur 3 erkennbaren oberen Teil noch einen unteren Teil auf. Sofern sich das Verriegelungselement 370 in einer radial nach außen verschobenen Position befindet, greift der untere Teil des Verriegelungselementes 370 in einen Vorsprung des Gehäuses 310 des Stellantriebs 300 ein. Durch das eingreifende Verriegelungselement 370 kann das Handbetätigungselement 130 hinsichtlich seiner Drehwinkellage und/oder hinsichtlich seiner axialen Verschiebung arretiert werden.

Um bei Bedarf das Verriegelungselement 370 auf einfache Weise radial verschieben zu können, ist in dem Gehäuse 132 des Handbetätigungselementes 130 eine Eingriffsöffnung 371 ausgebildet. Dadurch kann eine Bedienperson durch einen Eingriff mit lediglich einem Finger auf einfache Weise das Verriegelungselement 370 radial nach außen verschieben.

Gemäß dem hier dargestellten Ausführungsbeispiel weist das Gehäuse 310 einige Prüfdurchgriffe 311 auf, mit denen bei geschlossenem Gehäuse die Funktion des Stellantriebs 300 überprüft werden kann. Ferner weist das Gehäuse 310, welches gemäß dem hier dargestellten Ausführungsbeispiel ein einstückiges Kunststoffteil ist, eine Abdeckung 312 für einen nicht dargestellten Motor auf. Ein Durchbruch 313 in dem Gehäuse dient einer Kabelklemme für den Stellantrieb.

Figur 4 zeigt in einer perspektivischen Explosionsdarstellung einen Teil eines Stellantriebs 400, welcher ein zwischen dem Handbetätigungselement 130 und dem Gehäuse 310 angeordnetes Einrastelement 480 aufweist. Gemäß dem hier dargestellten Ausführungsbeispiel ist das Einrastelement eine Einrastring 480. Der Einrastring 480 ist so ausgeformt, dass bei einem Herunterdrücken des Handbetätigungselementes 130 in Richtung des Gehäuses 310 die in den Figuren 1 und 2 dargestellten Nocken 125 in den Einrastring 480 eingreifen. Somit dreht sich zwangsläufig bei einer Drehbewegung des Handbetätigungselements 130 der Einrastring 480 mit. In dem heruntergedrückten bzw. eingerückten Zustand ist bei dem hier dargestellten Ausführungsbeispiel ferner die welle 120 mit dem Handbetätigungselement 130 gekuppelt. Der Einrastring 480 weist ferner an seiner Außenseite eine asymmetrisch gezahnte Oberfläche auf, welche in Verbindung mit einer entsprechenden Innenoberfläche des Gehäuses 310 eine Rücklaufsperren-Funktionalität darstellt. Somit kann in dem eingerückten Zustand des Handbetätigungselementes 130 das Handbetätigungselement 130 zusammen mit der Welle 120 lediglich in eine Richtung, beispielsweise in Uhrzeigerrichtung, gedreht werden. Eine Drehung der Welle 120 in die entgegengesetzte Richtung, beispielsweise entgegen des Uhrzeigersinns, wird durch die Rücklaufsperren-Funktionalität zuverlässig verhindert. Auf diese Weise kann auch der Stellantrieb 400 nach einem manuellen Bedieneingriff, bei dem das Handbetätigungselement 130 eingerückt und ggf. zudem in eine Richtung gedreht wurde, in seiner Endposition verharren. Damit kann auch die Drehwinkelposition der Welle 120 in der manuell eingestellten Stellung arretiert werden.

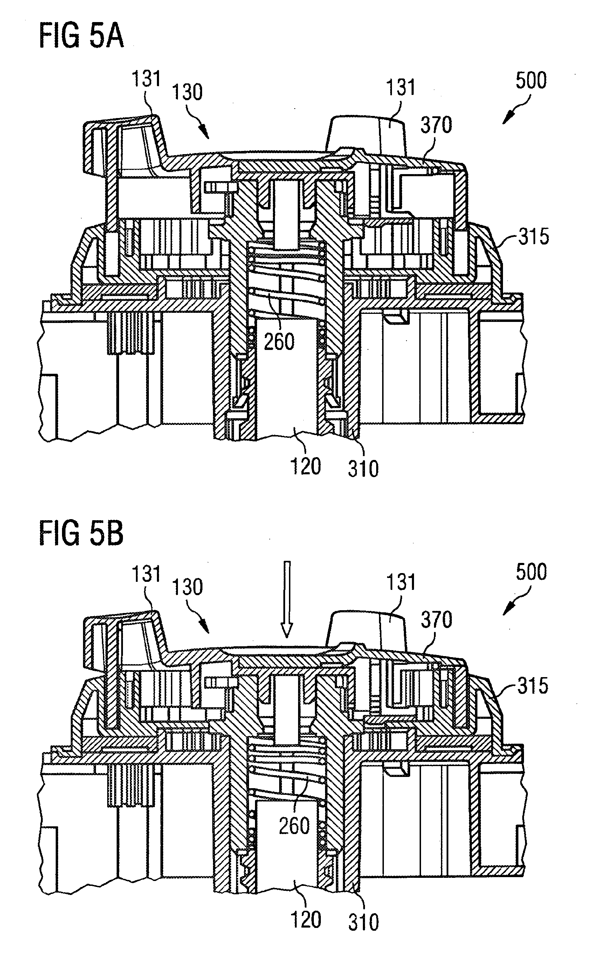

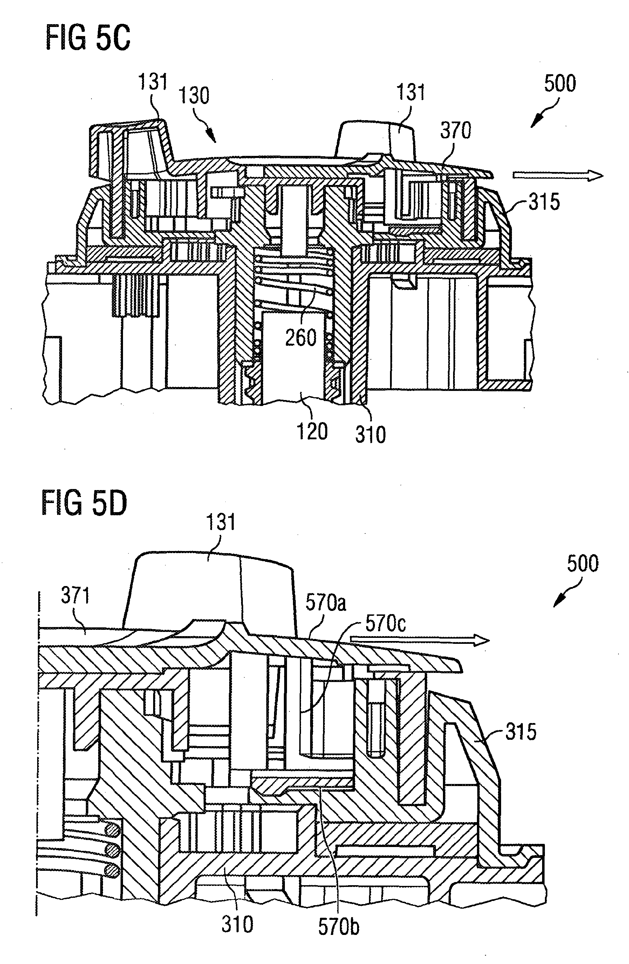

Die Figuren 5a, 5b, 5c und 5d zeigen jeweils in einer Querschnittsdarstellung einen keine Arbeitsfeder aufweisenden Stellantrieb 500. Der Stellantrieb 500 weist ein Handbetätigungselement 130 auf, welches wiederum ein radial verschiebbares Verriegelungselement 370 für eine Arretierung des Handbetätigungselementes 130 aufweist. Der Stellantrieb 500 entspricht dem in Figur 3 dargestellten Stellantrieb 300.

Figur 5a zeigt den Stellantrieb 500 in seinem Normalzustand (Auto Mode). Dies bedeutet, dass der Stellantrieb 500 mittels eines nicht dargestellten Motors, welcher an der Welle 120 angreift, betrieben wird. Dabei befindet sich das Handbetätigungselement 130 in einer ausgerückten oder oberen Position. Das Handbetätigungselement 130 ist abgesehen von der in Figur 2 dargestellten Rutschkupplung 250 von der Welle 120 entkoppelt.

Figur 5b zeigt den Stellantrieb 500 zu Beginn eines manuellen Bedieneingriffs durch eine Bedienperson. Der Bedieneingriff umfasst ein Herunterdrücken (Push) des Handbetätigungselements 130, welches in Figur 5b durch den vertikalen Pfeil verdeutlicht ist. Dabei wird eine Hubfeder 260 zusammengedrückt und es wird eine mechanische Kopplung zwischen dem Handbetätigungselement 130 und der Welle 290 hergestellt. Nun kann die Welle 290 durch Drehung des Handbetätigungselementes 130 in gewünschter Weise verdreht werden. Damit kann die Bedienperson ein mit der Welle 290 gekoppeltes Ventil in eine beliebige Position einstellen.

Um das Handbetätigungselement 130 und damit auch die Welle 120 in der manuell eingestellten Position zu arretieren, wird nun das Verriegelungselement 370 radial nach außen verschoben. Dies ist in Figur 5c verdeutlicht. Die radiale Verschiebebewegung ist durch den horizontalen Pfeil angedeutet.

Figur 5d zeigt in einer vergrößerten Darstellung, wie gemäß dem hier dargestellten Ausführungsbeispiel das Verriegelungselement in das Gehäuse 310 eingreift. Das Verriegelungselement 370 weist nämlich einen oberen Teil 570a, einen Verbindungssteg 570c und einen unteren Teil 570b auf. An dem oberen Teil 570a greift eine Bedienperson an dem Verriegelungselement an, um es radial nach außen zu verschieben. Der untere Teil 570b greift nach einer entsprechenden Radialbewegung in entsprechenden Strukturen des Gehäuses 310 ein. Gemäß dem hier dargestellten Ausführungsbeispiel wird dabei das Handbetätigungselement 130 sowohl gegen Drehbewegungen als auch gegen eine axiale Verschiebung gesichert.

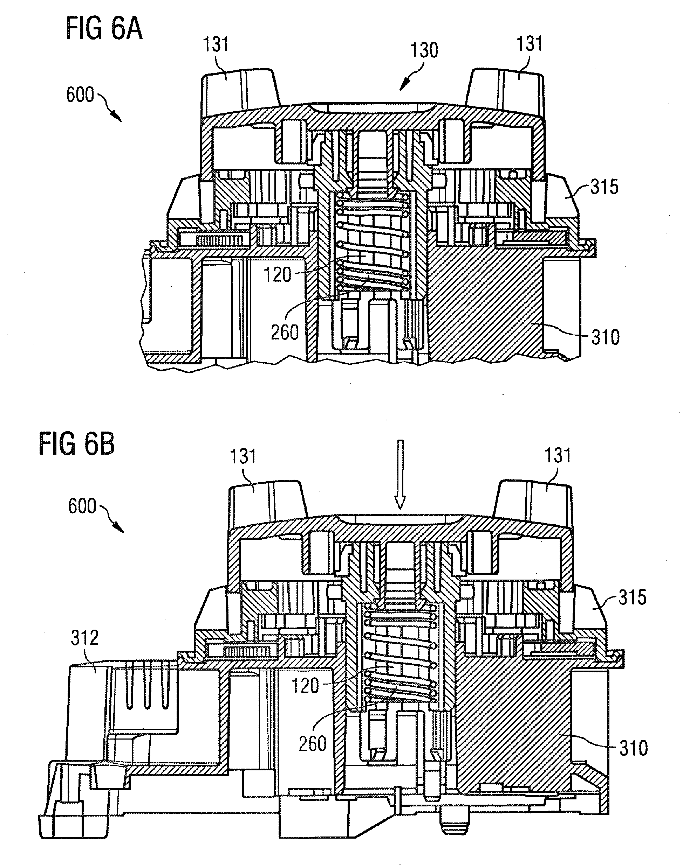

Figur 6a und 6b zeigen jeweils in einer Querschnittsdarstellung eine die Hubfeder 260 aufweisenden Stellantrieb 600. Der Stellantrieb weist ein zwischen dem Handbetätigungselement 130 und dem Gehäuse angeordnetes Einrastelement auf, welches eine Rücklaufsperren-Funktionalität bereitstellt. Der Stellantrieb 600 entspricht dem in Figur 4 dargestellten Stellantrieb 400.

Figur 6a zeigt den Stellantrieb 600 in seinem Normalzustand (Auto Mode). Dies bedeutet, dass der Stellantrieb 600 mittels eines nicht dargestellten Motors, welcher an der Welle 120 angreift, betrieben wird. Dabei befindet sich das Handbetätigungselement 130 in einer ausgerückten oder oberen Position. Das Handbetätigungselement 130 ist abgesehen von der in Figur 2 dargestellten Rutschkupplung 250 von der Welle 290 entkoppelt.

Figur 6b zeigt den Stellantrieb 600 zu Beginn eines manuellen Bedieneingriffs durch eine Bedienperson. Der Bedieneingriff umfasst ein Herunterdrücken (Push) des Handbetätigungselements 130, welches in Figur 6b durch den vertikalen Pfeil verdeutlicht ist. Dabei wird die Hubfeder 260 zusammengedrückt und es wird eine mechanische Kopplung zwischen dem Handbetätigungselement 130 und der Welle 290 hergestellt. Nun kann die Welle 290 durch Drehung des Handbetätigungselementes 130 in gewünschter Weise verdreht werden. Damit kann die Bedienperson ein mit der Welle 290 gekoppeltes Ventil in eine beliebige Position einstellen.

Gemäß dem hier dargestellten Ausführungsbeispiel erfolgt das Arretieren des Handbetätigungselementes 130 dadurch, dass durch die manuelle Drehbewegung des Handbetätigungselementes 130 die Arbeitsfeder gespannt wird. Beim Loslassen des Handbetätigungselementes 130 dreht die Arbeitsfeder dann das Handbetätigungselement 130 etwas zurück, bis eine Verzahnung zwischen dem in Figur 4 dargestellten Einrastelement 480 und dem Gehäuse 310 greift. Dabei entsteht eine hohe Reibkraft zwischen den in den Figuren 1 und 2 dargestellten Nocken 125 und dem Einrastelement 480, so dass das Handbetätigungselement 130 in der entsprechenden Axialposition verbleibt. In dieser Position ist durch das Einrastelement 480 eine Drehung des Handbetätigungselementes 130 unterbunden. Dadurch verbleibt trotz der Kraftwirkung der Arbeitsfeder sowohl das Handbetätigungselement 130 als auch die Welle 120 in einer stabilen (Dreh) Position.

Das Lösen (delock) des Handbetätigungselementes erfolgt gemäß dem hier dargestellten Ausführungsbeispiel dadurch, dass der nicht dargestellte Motor so betrieben wird, dass er sich immer zunächst in Uhrzeigerrichtung bewegt. Dadurch entriegeln sich die Nocken 125 (siehe Figuren 1 und 2) des Handbetätigungselementes 130 von dem Einrastelement 480 (siehe Figur 4). Dies hat zur Folge, dass die Spannkraft der Arbeitsfeder nicht mehr auf das Handbetätigungselement 130 einwirkt und damit die oben genannte Reibkraft erheblich reduziert wird. Damit wird die Spannkraft der Hubfeder dann ausreichend stark, um das Handbetätigungselement 130 anzuheben. Danach kann der Motor dann die Welle frei in beide Drehrichtungen bewegen.

Es wird darauf hingewiesen, dass die hier beschriebenen Stellantriebe im Rahmen eines einheitlichen Produktionsprozesses durch eine geeignete Variantenbestückung hergestellt werden können. Dies bedeutet, dass innerhalb einer Plattform für Stellantriebe für HLK-Ventile mittels Variantenbestückung unterschiedliche Stellantriebe mit unterschiedlichen Schaltlogiken realisiert werden können. Ferner kann innerhalb derselben Plattform auch noch ein weiterer sog. TSR (TÜV Spring Return) Stellantrieb hergestellt werden, welcher bereits oben in der Beschreibungseinleitung dieses Dokuments beschrieben wurde.

Bei einer derartigen Variantenbestückung können dem in den Figuren 1, 2, 3, 5a, 5b, 5c und 5d dargestellten Stellantrieb, welcher ein NSR (Non Spring Return) Stellantrieb ist, folgende Funktionalitäten zugeordnet werden: (a) Indikator für ein Drehen der Welle, (b) Umschaltung zwischen Motor- und Handbetrieb, (c) Arretierung des Handbetätigungselements durch radial verschiebbares Verriegelungselement und (d) Überlastkupplung zur Vermeidung von Beschädigungen von Antriebselementen.

Dem in den Figuren 1, 2, 4, 6a und 6b dargestellten Stellantrieb, welcher ein WSR (With Spring Return) Stellantrieb ist, können im Rahmen der genannten Variantenbestückung die folgenden Funktionalitäten zugeordnet werden: (a) Indikator für ein Drehen der Welle, (b) Arretierung des Handbetätigungselements durch das zwischen Handbetätigungselement und dem Gehäuse angeordnete Einrastelement und (c) Überlastkupplung zur Vermeidung von Beschädigungen von Antriebselementen (beispielsweise einem Motor und/oder einem Getriebe).

### Bezugszeichenliste

- 100: Stellantrieb
- 120: Welle / oberer zentraler Schaft
- 123: Verzahnung
- 125: radial abstehende Nocken
- 126: Schnappvorsprung
- 130: Handbetätigungselement / Handrad
- 131: Griffe
- 132: Gehäuse Handbetätigungselement
- 134: Aufnahmebereiche
- 136: Schnappvorsprung
- 140: Überlastkupplung
- 142: Kupplungselement
- 143: Verzahnung
- 144: Ausbuchtung
- 148a/b/c: austauschbares Federelement
- 250: Rutschkupplung
- 260: Hubfeder
- 290: Welle / unterer zentraler Schaft
- 300: Stellantrieb
- 310: Gehäuse Stellantrieb
- 311: Prüfdurchgriffe
- 312: Abdeckung Motor
- 313: Durchbruch für Kabelklemmen
- 314: Trägerflansch für Handbetätigungselement
- 315: transparente Abdeckung
- 370: Verriegelungselement
- 371: Eingriffsöffnung
- 400: Stellantrieb
- 480: Einrastelement / Einrastring
- 500: Stellantrieb (NSR)
- 570a: oberer Teil Verriegelungselement
- 570b: unterer Teil Verriegelungselement
- 570c: Verbindungssteg Verriegelungselement
- 600: Stellantrieb (WSR)

## Patentansprüche

1. Stellantrieb für ein Ventil, insbesondere für ein Ventil einer Heizungs-, Lüftungs- und/oder Klimaanlage, der Stellantrieb (100, 200, 300) aufweisend
• ein Gehäuse (310),
• eine Welle (120), welche zumindest teilweise in dem Gehäuse (310) angeordnet ist und welche direkt oder indirekt mit dem Ventil koppelbar ist, so dass bei einer Drehung der Welle (120) das Ventil verstellbar ist,
• ein Handbetätigungselement (130), welches mit der Welle (120) koppelbar ist, und
• eine Überlastkupplung (140), welche zwischen dem Handbetätigungselement (130) und der Welle (130) angeordnet ist und welche ein Drehmoment, welches von dem Handbetätigungselement (130) auf die Welle (120) übertragen wird, auf einen vorgegebenen Maximalwert beschränkt,
wobei die Überlastkupplung (140) ein Kupplungselement (142) und ein austauschbares Federelement (148a, 148b, 148c) aufweist, welches das Kupplungselement (142) gegen die Welle (120) drückt, so dass der Maximalwert für das übertragbare Drehmoment von dem austauschbaren Federelement (148a, 148b, 148c) abhängt,
wobei das austauschbare Federelement (148a, 148b, 148c) an einem Gehäuse (132) des Handbetätigungselements (130) angebracht ist und zumindest teilweise aus einem elastischen Material, insbesondere aus Metall, hergestellt ist,
**dadurch gekennzeichnet,**
**dass** das austauschbare Federelement (148a, 148b, 148c) die Form eines länglichen Streifens aufweist und in eine entsprechend geformte Aussparung (134) des Gehäuses (310) einlegbar ist,und,
**dass** das Kupplungselement (142) eine erste Verzahnung (143) und die Welle (120) eine zweite Verzahnung (123) aufweist, wobei die erste Verzahnung (143) und die zweite Verzahnung (123) zumindest teilweise ineinander greifen.

2. Stellantrieb nach dem vorangehenden Ansprüch, ferner aufweisend
• einen Motor, welcher mit der Welle (120) koppelbar ist.

3. Stellantrieb nach einem der vorangehenden Ansprüche, ferner aufweisend
• eine Arbeitsfeder welche mit der Welle (120) koppelbar ist.

4. Stellantrieb nach einem der vorangehenden Ansprüche, ferner aufweisend
• eine weitere Welle (290), welche direkt oder indirekt mit dem Ventil koppelbar ist, und
• einen Koppelmechanismus, welcher zwischen der weiteren Welle (290)und der Welle (120) angeordnet ist und welcher derart eingerichtet ist, dass durch den Koppelmechanismus
- in einem ersten Betriebszustand die weitere Welle (290) von der Welle (120) entkoppelt ist und
- in einem zweiten Betriebszustand die weitere Welle (290) mit der Welle (120) gekoppelt ist.

5. Stellantrieb nach dem vorangehenden Anspruch, wobei
- einer der beiden Betriebszustände dann vorliegt, wenn sich die weitere Welle (290) in Bezug zu der Welle (120) in einer ausgerückten Position befindet und wobei
- der andere der beiden Betriebszustände dann vorliegt, wenn sich die weitere Welle (290) in Bezug zu der Welle (120) in einer eingerückten Position befindet.

6. Stellantrieb nach einem der vorangehenden Ansprüche 4 bis 5, ferner aufweisend
• eine Rutschkupplung (250), welche ebenfalls zwischen der weiteren Welle (290)und der Welle (120) angeordnet ist und welche derart eingerichtet ist, dass sich, auch wenn sich der Koppelmechanismus in dem ersten Betriebszustand befindet, bei einer Drehung der weiteren Welle (290) die Welle (120) dreht.

7. Stellantrieb nach einem der vorangehenden Ansprüche, ferner aufweisend
• ein Verriegelungselement (370), welches an dem Handbetätigungselement (130) angebracht ist und welches derart ausgebildet ist, dass bei einer Aktivierung des Verriegelungselements (370) ein Verstellen des Handbetätigungselements (130) relativ zu dem Gehäuse (310) verhindert ist.

8. Stellantrieb nach dem vorangehenden Anspruch, wobei das Verriegelungselement (370) in Bezug zu der Längsachse der Welle (120) radial verschiebbar ist.

9. Stellantrieb nach einem der vorangehenden Ansprüche 1 bis 6, ferner aufweisend
• ein Einrastelement (480), welches zwischen dem Handbetätigungselement (130) und dem Gehäuse (310) angeordnet ist und welches einen ersten Einrastbereich und einen zweiten Einrastbereich aufweist, wobei der erste Einrastbereich eingerichtet ist in eine erste Oberflächenkontur des Handbetätigungselementes (130) einzugreifen und wobei der zweite Einrastbereich eingerichtet ist in eine zweite Oberflächenkontur des Gehäuses (310) einzugreifen.

10. Stellantrieb nach dem vorangehenden Anspruch, wobei das Einrastelement (480) derart ausgebildet ist, dass
- die Möglichkeit des Eingreifens des ersten Einrastbereiches in die erste Oberflächenkontur und/oder
- die Möglichkeit des Eingreifens des zweiten Einrastbereiches in die zweite Oberflächenkontur
davon abhängt, in welcher Position sich das Handbetätigungselement (130) befindet.

11. Stellantrieb nach dem vorangehenden Anspruch, wobei der zweite Einrastbereich des Einrastelementes (480) und/oder die zweite Oberflächenkontur des Gehäuses (310) derart geformt ist, dass das Einrastelement (480) in Bezug zu dem Gehäuse (310) eine Rücklaufsperren-Funktionalität aufweist.

12. Stellantrieb nach einem der vorangehenden Ansprüche 1 bis 11, ferner aufweisend
• eine Hubfeder (260), welche an dem Handbetätigungselement (130) angreift und eine Kraft entlang der axialen Richtung der Welle (120) auf das Handbetätigungselement (130) ausübt.

## Claims

1. Actuator for a valve, in particular for a valve of a heating, ventilation and/or air conditioning system, the actuator (100, 200, 300) comprising
• a housing (310),
• a shaft (120) which is arranged at least partially in the housing (310) and which can be coupled directly or indirectly to the valve such that the valve can be adjusted during a rotation of the shaft (120),
• a hand-operated element (130) which can be coupled to the shaft (120), and
• an overload clutch (140) which is arranged between the hand-operated element (130) and the shaft (130) and which limits a torque which is transmitted onto the shaft (120) by the hand-operated element (130) to a predetermined maximum value,
wherein the overload clutch (140) has a coupling element (142) and a replaceable spring element (148a, 148b, 148c) which presses the coupling element (142) against the shaft (120) such that the maximum value for the transmittable torque is dependent on the replaceable spring element (148a, 148b, 148c),
wherein the replaceable spring element (148a, 148b, 148c) is mounted on a housing (132) of the hand-operated element (130) and is produced at least partially from an elastic material, in particular from metal,
**characterised in that**
the replaceable spring element (148a, 148b, 148c) has the shape of an elongate strip and can be placed in a correspondingly shaped recess (134) of the housing (310), and,
the coupling element (142) has a first tooth system (143) and the shaft (120) has a second tooth system (123), the first tooth system (143) and the second tooth system (123) at least partially intermeshing

2. Actuator according to the preceding claim,
also comprising
• a motor which can be coupled to the shaft (120).

3. Actuator according to one of the preceding claims,
also comprising
• a working spring which can be coupled to the shaft (120).

4. Actuator according to one of the preceding claims,
also comprising
• a further shaft (290), which can be coupled directly or indirectly to the valve, and
• a coupling mechanism which is arranged between the further shaft (290) and the shaft (120) and which is configured in such a way that by means of the coupling mechanism
- the further shaft (290) is decoupled from the shaft (120) in a first operating mode and
- the further shaft (290) is coupled to the shaft (120) in a second operating mode.

5. Actuator according to the preceding claim, wherein
- one of the two operating modes is present when the further shaft (290) is in a disengaged position in relation to the shaft (120) and wherein
- the other of the two operating modes is present when the further shaft (290) is in an engaged position in relation to the shaft (120).

6. Actuator according to one of the preceding claims 4 to 5, further comprising
• a slipping clutch (250) which is likewise arranged between the further shaft (290) and the shaft (120) and which is configured in such a way that the shaft (120) rotates during a rotation of the further shaft (290) even when the coupling mechanism is in the first operating mode.

7. Actuator according to one of the preceding claims, further comprising
• a locking element (370) which is mounted on the hand-operated element (130) and which is embodied in such a way that an adjustment of the hand-operated element (130) relative to the housing (310) is prevented during an activation of the locking element (370).

8. Actuator according to the preceding claim, wherein the locking element (370) is radially displaceable in relation to the longitudinal axis of the shaft (120).

9. Actuator according to one of the preceding claims 1 to 9, further comprising
• a latching element (480) which is arranged between the hand-operated element (130) and the housing (310) and which has a first latching zone and a second latching zone, wherein the first latching zone is configured to engage in a first surface contour of the hand-operated element (130) and wherein the second latching zone is configured to engage in a second surface contour of the housing (310).

10. Actuator according to the preceding claim, wherein the latching element (480) is embodied in such a way that
- the possibility of the first latching zone engaging in the first surface contour and/or
- the possibility of the second latching zone engaging in the second surface contour
are/is dependent on the position in which the hand-operated element (130) is located.

11. Actuator according to the preceding claim, wherein the second latching zone of the latching element (480) and/or the second surface contour of the housing (310) are/is shaped in such a way that the latching element (480) has a non-return functionality in relation to the housing (310).

12. Actuator according to one of the preceding claims 1 to 11, further comprising
• a lifting spring (260) which engages with the hand-operated element (130) and exerts a force onto the hand-operated element (130) along the axial direction of the shaft (120).

## Revendications

1. Actionneur de soupape, notamment de soupape d'une installation de chauffage, de ventilation et/ou de climatisation, l'actionneur (100, 200, 300) comprenant
• un logement (310),
• un arbre (120) qui est disposé, au moins en partie, dans le logement (310) et qui peut être accouplé directement ou indirectement à la soupape de manière à ce que la soupape puisse être réglée avec une rotation de l'arbre (120),
• un élément d'actionnement manuel (130) qui peut être accouplé à l'arbre (120) et
• un accouplement de surcharge (140) qui est situé entre l'élément d'actionnement manuel (130) et l'arbre (120) et qui limite à une valeur maximale prédéfinie un couple qui est transmis de l'élément d'actionnement manuel (130) à l'arbre (120),
l'accouplement de surcharge (140) comprenant un élément d'accouplement (142) et un élément élastique interchangeable (148a, 148b, 148c) qui presse l'élément d'accouplement (142) contre l'arbre (120) de manière à ce que la valeur maximale du couple pouvant être transmis dépende de l'élément élastique interchangeable (148a, 148b, 148c),
l'élément élastique interchangeable (148a, 148b, 148c) étant placé au niveau d'un logement (132) de l'élément d'actionnement manuel (130) et étant fabriqué, au moins en partie, dans un matériau élastique, notamment un métal,
**caractérisé en ce que**
l'élément élastique interchangeable (148a, 148b, 148c) a la forme d'une bande allongée et peut être inséré dans un évidement (134) de forme correspondante du logement (310) et
**en ce que** l'élément d'accouplement (142) est pourvu d'une première denture (143) et l'arbre (120) est pourvu d'une seconde denture (123), la première denture (143) et la seconde denture (123) s'engrenant au moins partiellement l'une dans l'autre.

2. Actionneur selon la revendication précédente, comprenant, en outre,
• un moteur qui peut être accouplé à l'arbre (120).

3. Actionneur selon l'une des revendications précédentes, comprenant, en outre,
• un ressort de travail qui peut être accouplé à l'arbre (120).

4. Actionneur selon l'une des revendications précédentes, comprenant, en outre,
• un deuxième arbre (290) qui peut être accouplé directement ou indirectement à la soupape et
• un mécanisme d'accouplement qui est situé entre le deuxième arbre (290) et l'arbre (120) et qui est adapté pour que le mécanisme d'accouplement
- désaccouple le deuxième arbre (290) de l'arbre (120) dans un premier état de fonctionnement et
- accouple le deuxième arbre (290) à l'arbre (120) dans un deuxième état de fonctionnement.

5. Actionneur selon la revendication précédente,
• l'un des deux états de fonctionnement existant lorsque le deuxième arbre (290) se trouve dans une position désenclenchée par rapport à l'arbre (120) et
• l'autre des deux états de fonctionnement existant lorsque le deuxième arbre (290) se trouve dans une position enclenchée par rapport à l'arbre (120).

6. Actionneur selon l'une des revendications 4 à 5, comprenant, en outre,
• un accouplement patinant (250) qui est également situé entre le deuxième arbre (290) et l'arbre (120) et qui est adapté pour que l'arbre (120) tourne lors d'une rotation du deuxième arbre (290), même lorsque le mécanisme d'accouplement se trouve dans le premier état de fonctionnement.

7. Actionneur selon l'une des revendications précédentes, comprenant, en outre,
• un élément de verrouillage (370) qui est placé au niveau de l'élément d'actionnement manuel (130) et qui est exécuté de manière à empêcher un déplacement de l'élément d'actionnement manuel (130) par rapport au logement (310) lorsque l'élément de verrouillage (370) est actionné.

8. Actionneur selon la revendication précédente,
l'élément de verrouillage (370) pouvant être déplacé radialement par rapport à l'axe longitudinal de l'arbre (120).

9. Actionneur selon l'une des revendications précédentes 1 à 6, comprenant, en outre,
• un élément d'encliquetage (480) qui est situé entre l'élément d'actionnement manuel (130) et le logement (310) et qui comprend une première zone d'encliquetage et une seconde zone d'encliquetage, la première zone d'encliquetage étant adaptée pour s'enclencher dans un premier contour de surface de l'élément d'actionnement manuel (130) et la seconde zone d'encliquetage étant adaptée pour s'enclencher dans un second contour de surface du logement (310).

10. Actionneur selon la revendication précédente, l'élément d'encliquetage (480) étant exécuté de manière à ce que
- la possibilité d'enclenchement de la première zone d'encliquetage dans le premier contour de surface et/ou
- la possibilité d'enclenchement de la seconde zone d'encliquetage dans le second contour de surface dépende/nt de la position dans laquelle se trouve l'élément d'actionnement manuel (130).

11. Actionneur selon la revendication précédente, la seconde zone d'encliquetage de l'élément d'encliquetage (480) et/ou le second contour de surface du logement (310) étant formé/s de manière à ce que l'élément d'encliquetage (480) ait une fonction antiretour par rapport au logement (310).

12. Actionneur selon l'une des revendications précédentes 1 à 11, comprenant, en outre,
• un ressort de levage (260) qui est en prise avec l'élément d'actionnement manuel (130) et exerce une force sur l'élément d'actionnement manuel (130) le long de la direction axiale de l'arbre (120).
